# EUROPEAN PATENT APPLICATION

(11) **EP 3 236 402 A1**
(43) Date of publication of application: **25.10.2017**
(21) Application number: 17167189.4
(22) Date of filing: 20.04.2017
(51) Int. Cl.: G06Q 10/08

(54) **METHOD FOR THE CORRECT IMPLEMENTATION OF A PLANOGRAM INSIDE A POINT OF SALE**

(30) Priority: 20.04.2016 IT UA20162729
(71) Applicant: CEFLA SOCIETA' COOPERATIVA, 40026 Imola (BO) (IT)
(72) Inventor: BONZI, Giancarlo, 40026 IMOLA (IT)
(74) Representative: Karaghiosoff, Giorgio Alessandro

(57) **Abstract**

Method for detecting the correct displaying of goods in a point of sale, wherein the goods (201, 202, 203, ...) on sale are displayed on a plurality of shelving (131, 132, 133....), supporting a plurality of beacons (301, 302, 303, ...); the arranging of said goods being performed by an operator (33) having a terminal (3) comprising at least a processor and at least a program (30) which is saved and executable by said terminal (3), said terminal being provided with at least a communication interface with a (not shown) remote central server, the execution of said program by said processor comprising the following steps:
- Processing of the signal coming from at least one beacon (301, 302, 303, ...);
- Requesting by the terminal (3) to the remote server to provide the ideal desired disposition of goods contained in an ideal planogram (100) saved in a memory of said remote server, which ideal desired disposition is relating to the portion of shelving in front of which the operator (33) is;
- Receiving by the terminal (3) the required information and visualization on said mobile terminal (3) of said information;
- Arranging by the operator (33) of the goods on the shelving according to the ideal planogram (100);
- Successive acquiring, by the operator (33) through mobile terminal (3), of an image (131i) of the shelving just arranged and transmitting of said image to the remote server;
- Receiving said image by the remote server, and construction through said image (131i) of a corresponding portion of a real planogram (101).

## Description

The present invention relates to the technical field of interaction with customers inside a point of sale, and in particular to a method and an apparatus for implementing said interactions; a portion of the apparatus (the hardware) can be electrically supplied by a pre-existing system for lighting shelving.

The point of sales of Mass Retail Channel typically allow free access to public. A very high percentage of customers is provided with mobile devices (smartphones, tablets, etc.) for personal communication, used as personal devices even in the steps of product information, comparison, promotion and purchase.

Hand in hand, even the human operators of mass retail channel are provided with mobile communication devices or mobile terminals to perform their job for the points of sale themselves.

In the state of the art, the implementation of systems to supply information towards mobile terminals has already been described. Such information are contextualized according to the indoor position of the terminals themselves, like mall arcades or points of sale themselves.

E.g., Gaunt in WO2013190511 describes a method to supply information towards mobile devices, through transmitters (e.g. beacons) placed inside buildings, so that each mobile device can find the closest transmitter and visualize the most relevant information associated to the position of the moment.

E.g., Athsani in GB2508087 describes a system wherein a plurality of transponders (e.g. beacons) identifies specific regions of interest inside a point of sale, so that the mobile device of a customer can find the specific area wherein the customer is inside the point of sale itself, and according to given conditions, trigger an action.

E.g., Kim in US2012158297 describes a system to provide indoor located based services, through the interaction of different technologies like beacons, 2D barcodes, geomagnetic sensors, cameras, devices for measuring distance, etc.

E.g., Nehrenz in US2015005011 describes the interaction between mobile devices, a plurality of beacons placed inside points of sale and at least one, possibly remote, server (e.g. cloud computing).

Hand in hand, indoor positioning technologies are undergoing a steady progress, thanks also to beacons having higher performances, like e.g. described in IT102015000084877 of the same applicant. Moreover, the growing diffusion of electrical supply in shelving allows to activate new interactions with the public, as described e.g. in IT102015000074960 of ELCA Technologies.

Kulig in WO2015/195415 illustrates a method wherein positioning can be exploited to visualize information about products, superimposing them to the real image of the display. This under the hypothesis that the information received by the retailer on the aligning of the theoretical planogram are congruent to the real situation.

Although indoor positioning systems have been described in literature for many years, their implementation is very slow, due to the high number of required interfacing.

On the market, Electronic Shelf Labels, (ESLs) are already available, which can keep the price visualized on the labels synchronized with the values in the product table of the managing program. Point of sale staff places each ESL in front of the product on the shelving, staff who can visually control the correct pairing between the product and its respective ESL visualizing the price and the main data of that product.

The ESLs, being electronic devices provided with their own electronic battery, can be provided with NFC or Bluetooth devices, and prospectively can supply digital contents towards the mobile terminals of the person in the point of sale.

Clearly, the broadcasting transmission of digital information towards mobile terminals by ESLs requires an increase of their energy consumption, causing a heavy limitation to the life of their batteries.

Even in shops extensively provided with electronic labels, methods to automatically check that every displayed product has its own label in front of it are very onerous and complex; therefore, in the vast majority of cases, control is visually performed only, by point of sale staff.

Often staff arranges the products on shelving according to paper or digital instructions, which indicate how to arrange the products on the shelving according to the best marketing criteria of the moment.

Even in points of sale extensively provided with electronic labels, all the products on shelving are not always arranged according to the best marketing criteria, taking into account e.g. the criterion of positioning at eye-level the products promising the best volume of sales or the best margins.

When these criteria vary, new documentation must be prepared, showing the product that has to be removed and the new product to be arranged on shelving; or the shifts of the products on the shelf are highlighted.

In the big store chains, the problem is amplified, in that typically highly qualified personnel centrally study marketing dispositions, and then said dispositions have to be implemented in the single points of sale.

Rarely all the single points of sale have the same layout and the same, good-for-all, disposition of shelving and products, exactly equal to what was centrally planned; therefore, each time a point of sale receives new documentation on the disposition of goods on shelving, the staff of the single point of sale has to revise the documentation. Alternatively, the staff has some discretion in implementing the disposition of products on the shelf.

This procedure leads to a possible/probable misalignment of product display of a single point of sale with respect to central marketing indications, and to differences among points of sale belonging to the same chain.

This difficulty is amplified by the fact that often the staff arranging shelving has little confidence with products, or has low schooling. A precise management would require an extra work by the management of the single point of sale in verifying and aligning the central marketing documentation to the real disposition of that particular point of sale, and a lot of time to perform training and explaining to the operative personnel. In absence of this aligning of documentation and staff training, the misalignment between central indications and real arrangement in the single point of sale has to be tolerated.

Products variety increased with respect to the past decade, amplifying these difficulties. Due to a more accurate customer segmentation, products are planned to share advertising campaigns with more versions of similar products. This led to a proliferation of product packaging, differing for few details only, which can be colour, or a part of the image printed on the packaging, or some writing on the package. This increases the difficulties of the designated staff in arranging or modifying the arrangement of shelving.

Not infrequently, the documents describing sale displays are rich of details and very wide, and therefore difficult to use, especially when staff has low schooling, difficulties in reading, low confidence with the product to be displayed.

Moreover, often product arrangement is performed very quickly, during nighttime or very early in the morning: all this explains the real difficulties in keeping product display aligned with the best marketing criteria.

The managers of points of sale have the need to produce the documentation about product arrangement on the shelving in the quickest possible way, to distribute it effectively to point of sale staff, to verify that the arranging was correctly performed according to marketing indications, or to quickly detect the real disposition of products on shelving, and to make available this disposition to informative system, so that further services can be generated.

These difficulty and uncertainty in the real positioning of products displayed on sale is a real limitation to supplying digital services inside points of sale.

The interest in supplying digital services inside points of sale is increasing, in particular by mass retail channel, which is planning important investments in information technologies and telecommunication.

Nonetheless, even the best promotion strategy of a product A in all the points of sale of a chain, e.g. through a digital coupon to be locally supplied to the person near to the product, would face the problem that centrally it is believed that all products A are on shelving B, which not necessarily occurs in all the shops of the chain, due to the above-explained difficulties.

Even the best strategy of product search by a consumer might produce a poor result, in that if the customers wishes to know on which shelf she/he can find product A, the central system answer "on shelf B" might not be correct. A misalignment might occur between the theoretical position and the real position of the product in the different shops of the chain. For instance, for point of sale 11 product A might be on shelf B, but in point of sale 12 product A is on shelf C, instead of B.

Some systems of electronic labels allow to limit this problem if the customer is already in the correct area, thanks to the fact that, answering to an inquiry by a customer looking for product A with a personal mobile device provided with a suitable app, a light flash is emitted by the electronic label paired to the product. WO2013017288 of Findbox describes a system wherein, answering to an enquiry by a customer, a light indicator is activated, signalling where the product should be. A drawback of this method is the shortening of the life of ESLs battery due to the use of light flashes.

More and more often, consumers prepare and maintain their shopping list through electronic devices, and more and more through their personal mobile terminals. The possibility of driving a customer in her/his path inside the point of sale according to her/his shopping list loaded in her/his mobile personal terminal can drown, and therefore irritate the customer, in that a sure positioning cannot be achieved inside the point of sale.

The present invention describes a method and an apparatus to detect the real positioning of the products displayed in a shop, produce the documentation showing the real positioning of products, make available such documentation on digital supports.

The present invention provides a method for overcoming the above drawbacks of the know methods described above and for achieving the following advantages having the combination of features of the independent claim 1.

The dependent claims 2 to 7 describes further improvements and embodiments of the method.

The present invention provides also for a system for overcoming the above drawbacks of the know systems described above and for achieving the following advantages having the combination of features of the independent claim 8.

The dependent claims describes further improvements and embodiments of the system.

There are several advantages of the method according to the present invention.

A first advantage of the present method is the possibility of producing documentation usable for arranging products on shelving, both in the first arranging and in subsequent modifications.

A second advantage of this method is the possibility of distributing such documentation to the staff arranging the shelving, so that the "right" information arrives to the "right" person, in front of the "right" shelving. Moreover, detecting the identity of the person arranging goods for each shelving is possible.

A third advantage of this method is the possibility of detecting the real disposition of goods on shelving, and of giving a feedback on the job performed to the person who performed it. This might be connected to an incentive system for the worker, and even to publish such situation on electronic devices.

A fourth advantage of the present method is the possibility to detect the real disposition of goods on the shelf, and therefore to publish on electronic devices the updated situation, allowing the central marketing of retail chain to have the situation of the display under control, and to easily highlight the discrepancies with the ideal disposition of products. This facilitates the reproduction of the best configuration detected in a point of sale in other shops of the chain.

A fifth advantage of this method is the possibility of easily showing to goods manufacturers the real positioning of their products on shelves, even with the aim of evaluating the marketing and promotion of the products themselves, and the possibility to show the compliance with the commercial agreements about the positioning of the product.

A sixth advantage of this method is the possibility to supply through cloud the database for interaction digital services with mobile terminal, counting on a real map of the positioning of products inside a single point of sale, so improving the customer loyalty service.

A seventh advantage of the present method, when a customer acquires with her/his camera a shelving, is the possibility of providing information, tutorials, status of promotions on the mobile terminal itself.

An eighth advantage of the present method, when implementing it on a lighted shelving, e.g. with light sources provided with a supply and control devices as described in IT102015000074960 of ELCA Technologies, is the possibility of triggering a light signal on the shelving supporting that product through the mobile terminal of a customer looking for that product. The present invention extends this feature, thanks to the fact that such light signal is linked to the real, detected planogram.

Further advantages and properties of the present invention are disclosed in the following detailled description, in which exemplary embodiments of the present invention are explained in detail based on the drawings:
- Figure 1: Schematic representation of the state of the art: points of sale arranged differently;
- Figure 2: Schematic front view of the main components of the method according to the present invention;
- Figure 3: Schematic top view of the main components of the method according to the present invention;
- Figure 4: Schematic view of the comparison between ideal planogram and real planogram according to the present invention;
- Figure 5: Schematic view of the light signalling of the presence of a given product on a shelf;
- Figure 6: Flux diagram of the method for arranging the shelf;
- Figure 7: Flux diagram of the method of comparison between ideal and real planogram;
- Figure 8: Flux diagram of the pairing method of the supply and control systems of light sources to the real planogram.

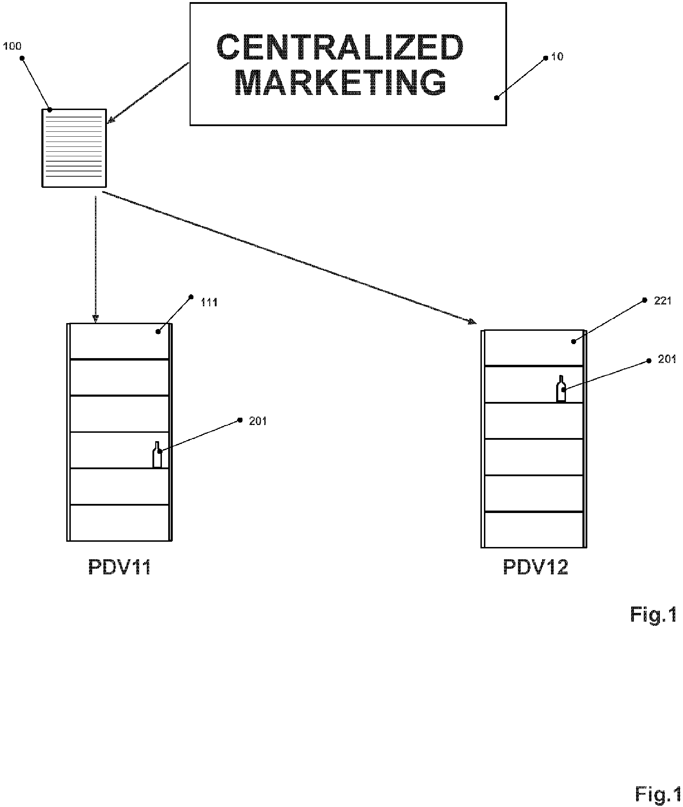

Figure 1 shows two shelving 111, 121 arranged in two different Points of Sale PoS 11 and PoS 12, laden with goods as commonly occurs in points of sale. Said shelving 111 and 121, well known in the art, comprise a plurality of shelves arranged on different levels. It is known that the product which are at eye level are more easily chosen by consumers, and therefore such position is particularly sought after by goods manufacturers. Therefore, the position at eye level is the object of commercial agreements.

In the example of Figure 1, the shelving 121 of PoS 12 was correctly arranged according to the indications 10 of centralized marketing, contained in the planogram 100, placing the product 201 at eye level for an adult customer, while the shelving 111 was incorrectly arranged placing the same product 201 on a lower shelf.

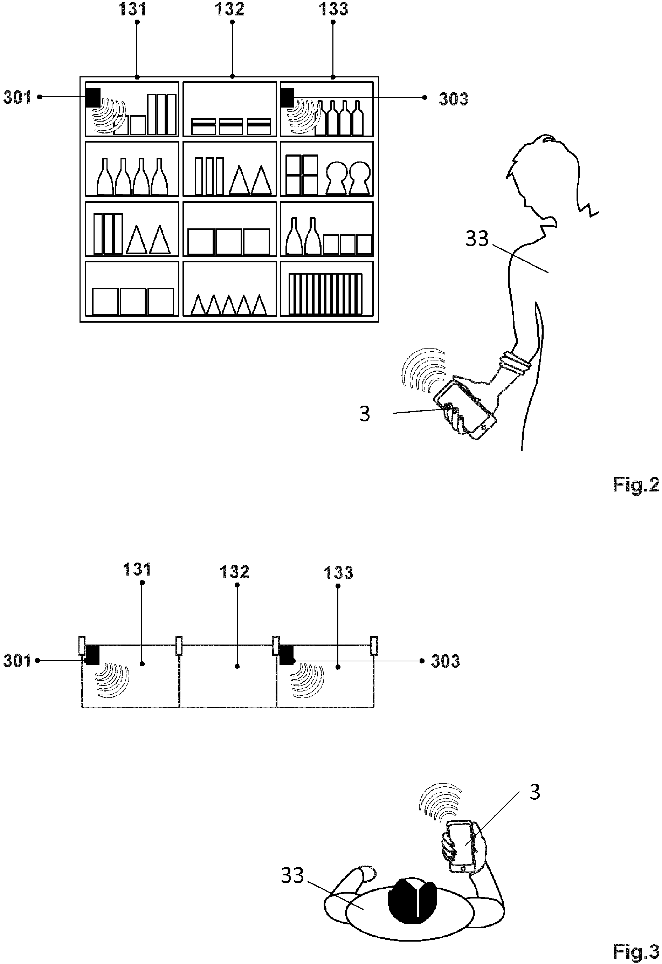

Figure 2 (front view) and Figure 3 (top view) show a shelving having a plurality of sections 131, 132, 133, .... On shelving 131 there is provided at least a beacon 301, allowing to find precisely the position of the shelving 131 inside the point of sale 13 and, even if with some approximation, the position of the mobile terminal 3 in front of the shelving 131. In order to practically perform the method, it is worth noting that the beacons 301, 302, 303, ... are preferably electrically supplied through the electric net supplying the lighting of shelving 131, 132, 133, .... The mobile terminal 3, owned by a person 33 (who is a member of the staff of the point of sale) in the position Pos3, receives a series of signals, coming from beacons, which are generally indicated with B(3, Pos3), in that they depend on the kind of mobile terminal 3 and on the position of the mobile terminal itself.

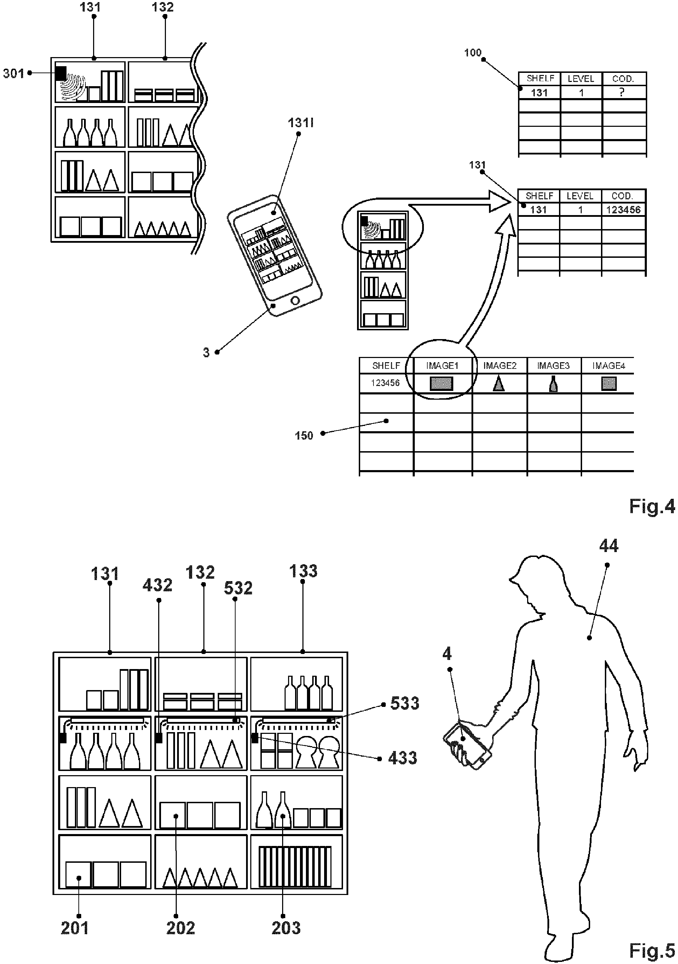

Figure 4 graphically shows the comparison method between ideal planogram 100 and real planogram 101. When a PoS member of staff is with her/his mobile terminal in the position 3, i.e. in the area of shelving 131, 132, 133, ..., the app 30 working on her/his terminal 3, according to the signals received by beacon B(3, Pos3) helps her/him to find, in the ideal planogram 100, the portion of document relating to the ideal arranging of shelving 131, 132, 133, ..., and to visualize easily and immediately this documentation. The staff member can therefore concentrate on a relatively limited portion of document, and enlarge and study it as wished.

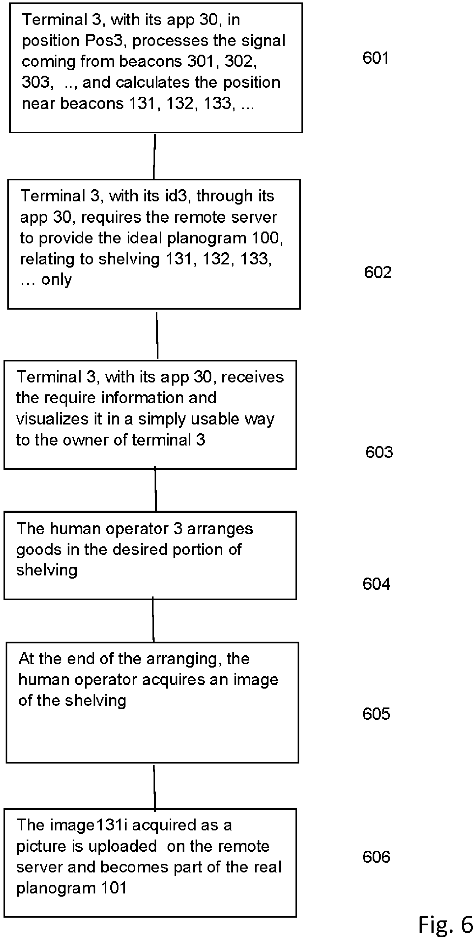

Figure 6 shows a flux diagram of the method allowing the staff member of the point of sale to arrange a shelving 131.

When a PoS staff member, identified with Id(3), is with her/his mobile terminal 3, in position 3, i.e. in the area of shelving 131, 132, 133, first the app 30 processes the signals coming from beacons 301, 302, 303 placed on shelving 131, 132, 133 respectively (step 601).

Successively, the terminal 3, with its Id3, through its app 30, asks the remote server to provide the ideal positioning of the products in 100, relating to shelving 131, 132, 133 only (step 602).

The terminal 3, with its app 30, receives the required information and visualizes them in a simply usable way to the staff member owner of terminal 3 (step 603).

According to the indications of the ideal planogram 100, visible on her/his terminal 3, the staff member arranges the goods on the shelving (step 604).

At the end of the arranging, with the app 30 working on her/his terminal 3, the staff member scans EAN code (European Article Number) of the product 201, or captures an image allowing to go back to the EAN code of that product 201 (step 605).

Now the app 30, according to the signals received from beacon B(3, Pos3) communicates to a remote server that the product 201 is really in the area of shelving 131, 132, 133, ..., so acquiring the elements to document the real planogram101 (step 606).

When the staff member, who is in Pos3, has finished her/his work, she/he frames the shelving 131 and takes a picture 131i. When image 131i is captured, the app 30 captures the signals coming from the beacons 301, 302, 303, characterizing position 3, that are generally indicated as B(3, Pos3). In general, such signals are a process of the RSSI (Received Signal Strength Indication) received in a given time, combined with other possible information on the status of the sensors inside a smartphone, like accelerometers, gyroscopes, magnetometers, brightness sensors, etc. In such circumstance the code of the worker using the terminal 3 is surely known, and is indicated as Id(3).

Once the image 131i is acquired, the app 30 has the following information: 131i, B(3, Pos3), Id(3), on which a process can start. The process can occur through an algorithm present in the app 30 itself; or using the more common scheme of processing through cloud, this information is transferred in a remote server on which the processing algorithm works.

The algorithm has a database containing the list of all the products on sale in the PoS, and for each of these products, the unique identifying code of the product, and the images of all the faces of the product in its package.

The algorithm, once received the image 131i, subdivides it in portions, to individuate each part of the image in which the image of the product was captured. To subdivide the image on the product in reasonable portions, the following typical features can be individuated. The post supporting the shelves of the shelving itself has regular holes at a distance of 25 mm or 50 mm, typically having rectangular shape with some rounding, which are used to support the shelves. Another typical feature having known dimensions recognizable by the algorithm is the front of the shelf, typically 3, 25, or 50 mm high. Another typical element having known dimensions is the label support, having a height of about 32 or 40 mm. Another typical element to precisely find the section of shelving on which the operator is working is a QR code univocally individuating the section.

For each portion of the image 131i, the algorithm finds in the database of PoS products 150 the product displayed in that portion, finding its representative code, e.g. its EAN code in Europe. Now the algorithm can give back the list of displayed products on that shelving, shelf by shelf, from left to right, from top shelves to bottom shelves. This list of products displayed on the shelving 131 just obtained is the portion relating to shelving 131 in the planogram 101 describing the real disposition of products. The complete list of products displayed in the whole PoS is indicated with 101 in Figure 2.

When a staff member 3 in the point of sale photographs the image 131i, the image can be used to show the real display on shelving 131. With the staff member in the position 3 in front of shelving 131, a portion of the list of the ideal planogram 100 can be compared to the homologous portion of the real planogram 101. The comparison can confirm that the desired ideal positioning was obtained, or can highlight the gaps with respect to the ideal positioning. This procedure can be used e.g. to check the work of staff members of the point of sale, and to form the basis of a reward system for staff members themselves, when their disposition is perfectly complying with the indications contained in the ideal planogram 100.

Moreover, the picture and/or the real arrangement of products 101 can be used to show to goods manufacturer the compliance with the clauses relating to the positioning of their products. Reasonably, the PoS staff members, identified through their identifying code, perform these operations in a congruent way, and therefore the information gathered through their identifying code is reliable. Were the same operations performed by customers, the degree of reliability of the survey would be a little lower; keeping into account the role of the person (staff or customer) who captured the image can provide criteria useful to interpret the acquired data.

When a customer acquires the image 131i, it can be uploaded in an app of the point of sale, with many consequences:
- If the customer uploaded her/his shopping list on the mobile device, the capture of the image 131i informs the customer 44 that she/he is in front of a shelving 131 supporting one or more of the articles in her/his shopping list, and that the customer has not seen yet.
- The capture of the image 131i triggers a system for goods promotion, advising the customer which, among the products present on that shelving, is under promotion at that moment, as shown in Figure 3. On the image 131i appears a signal 131p signalling the promotion. Alternatively, the app issues coupons linked to the position of the customer inside PoS 13. When the consumer is in front of the shelving 131, as detected by the beacon 301, only the products under promotion on shelving 131 are highlighted; now the customer can click on the preferred product and ask for the issuance of a coupon for that product.
- The capture of the image informs the customer that on the shelving 131 there are goods of her/his interest. E.g., let us say that the consumer is celiac and therefore interested in buying gluten-free products: the app could signal that on the shelving 131 there are gluten-free articles, or highlight gluten-free articles only. This could occur according to the monitoring of buying habits of the consumer, or because the customer previously indicated her/his preferences in the app on the portable device.
- The capture of image 131i might activate a link to a product website.
- The capture of image 131i might activate a tutorial on the product.
- The capture of the picture 131i, with following upload in the app, might signal a stock shortage to the point of sale, so that PoS staff goes to the shelving 131 to reload it with new goods.
- The capture of image 131i, with following uploading on the app of the image itself and of the signals coming from the beacons, can be used to update to the present moment, in real time, the positioning 101 of the products inside the PoS. Even if the PoS staff has not detected the real positioning of products for a long time, the consumer themselves, with their wandering in the PoS, could spontaneously update the real planogram 101. Thanks to the fact that the consumer X mapped product 201 in the area J, subsequently the consumer Y looking for the product 201 can be sure that it is in the area J, simply consulting the online planogram 101.

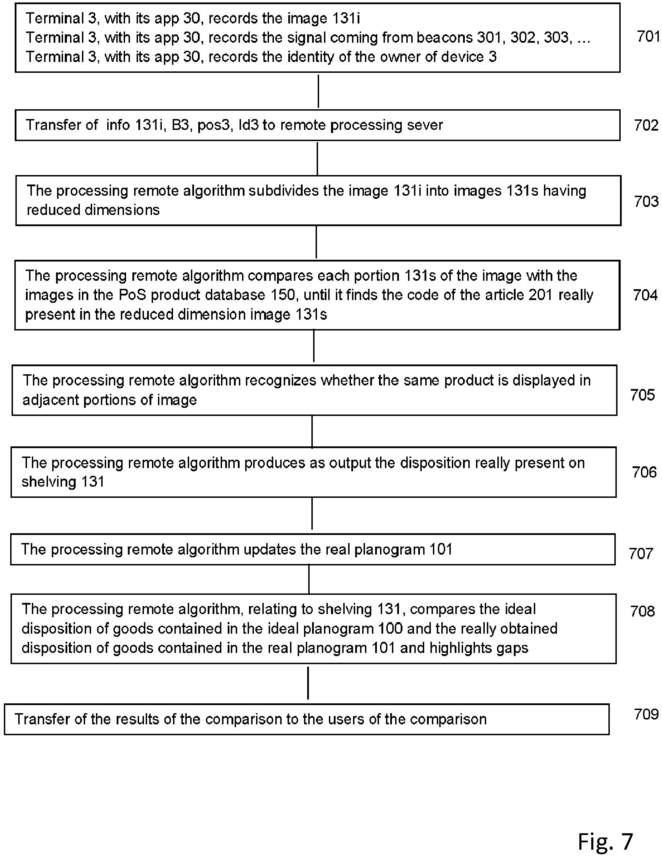

Figure 7 shows the flux diagram of the algorithm allowing to compare the ideal planogram 100 and the real planogram 101, already shown in a graphical form in Figure 4.

In the first step 701, the terminal 3, with its app 30, captures the picture 131i. Then the terminal 3, with its app 30, detects the signals coming from the beacons 301, 302, 302, .... Finally, the terminal 3, with its app 30, records the identifying code of the owner of the mobile device 3.

In step 702 there is the transfer of information 131i, B3, Pos3, Id3 to the processing remote server (not shown)

In step 703 the remote processing algorithm subdivides the image in a plurality of small portions 131s.

In step 704, the processing algorithm subdivides the image, compares each portion of the image with the images present in the PoS database 150, until it finds the code of the product 201 really present in the small image 131s.

In step 705, the processing remote algorithm recognizes whether the same product is displayed in adjacent portions of image.

In step 706, the remote processing algorithm produces as output the real positioning 101 of the products on the shelving 131.

In step 707 the remote processing algorithm updates the real positioning 101 of products.

In step 708, the remote processing algorithm, with reference to shelving 131, compares the desired ideal positioning 101 of products and the real positioning 100, and highlights gaps.

In step 709, the results of the comparison are transferred to the users.

In an alternative embodiment, the acquisition of the images of the products displayed on the shelving, i.e. the real planogram 101, occurs automatically through webcams, which can be unmovable or mobile; in a preferred embodiment, the acquisition of goods images is performed through drones provided with webcam.

In a further embodiment shown in Figure 5, the shelving 131 is provided with an electronic device 431, which also supplies and controls a light source 531, placed on shelving 131.

By way of an example, the consumer wishes to buy the product 201, which is displayed on shelving 131. The product 201 had been uploaded on the shopping list of the mobile device 4 of the consumer 44.

When the consumer 44 enters in the area of shelving 131, 132, 133, but not necessarily right in front of the shelving 131 displaying product 201, the app 30, containing the information that the product 201 is on the shelving 131, can trigger a light flash connecting to the lighting device 531. The advantage is that the consumer, keeping her/his mobile device in her/his pocket, can trigger the flashing of the shelving displaying the products of her/his shopping list, obtaining a very agreeable shopping experience, speed and completeness of the buying process.

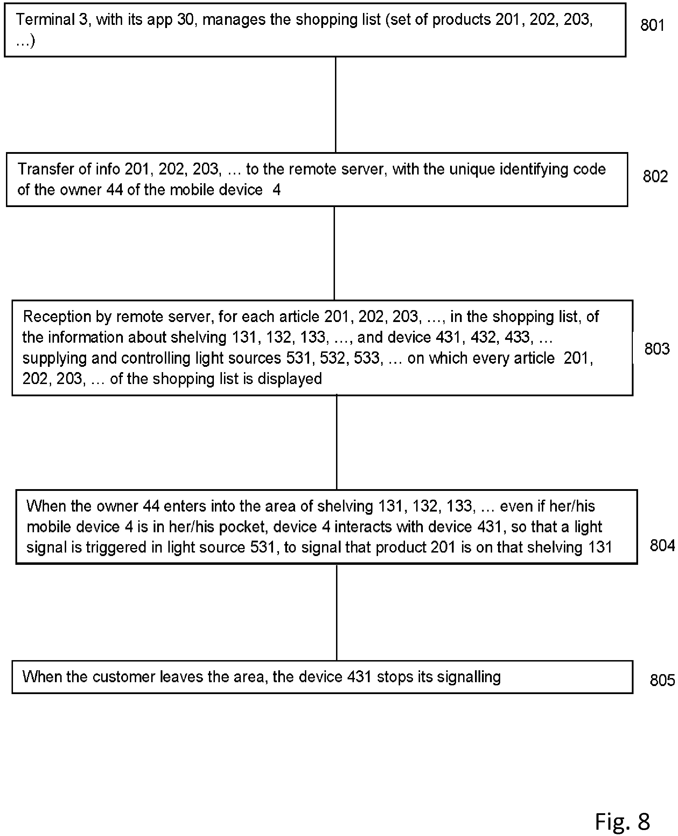

Figure 5 shows a schematic representation of a real situation of the method for pairing supply and control systems of light sources to the real planogram, while Figure 8 shows its flux diagram.

The obvious precondition of this portion of the method is that the supply system, realized through rails on the shelving 131, 132, 133, ..., at the same time electrically supplies both beacons 301, 302, 303, ..., and lights 531, 532, 533, ..., positioned on the same shelving to illuminate the goods, and also their supply and control systems 431, 432, 433, .... The electronic circuit of the beacon and the electronic circuit of the supply and control system can physically be on the same electronic board.

On the terminal 4 (preferably a smartphone), on which the app 30 is loaded, the shopping list of a given consumer 44 is present (step 801).

The shopping list is transferred to the remote server once the consumer enters into the point of sale (step 802).

When the customer reaches the area of shelving 131, 132, 133, even if the smartphone 4 is in her/his pocket, interacts with the device 431 so as to trigger the flashing light (preferably in the form of LEDs) (step 803).

Reception by the remote server, for each product 201, 202, 203, ... in the shopping list, of the information about shelving 131, 132, 133, ... and of the device 431, 432, 433, ... performing the supply and control of the light source 531, 532, 533, ... of the shelving on which each product 201, 202, 203, ... of the list (step 804). This passage can be read in a slightly different way if the shopping list contains a generic product description (e.g. biscuits) or the exact indication of the product to be bought (e.g. Rigoli Mulino Bianco).

When the customer leaves the area, the device 431 stops its signalling function (step 805).

It is worth noting that in the description reference was always made to a human operator 33, because today this is how goods are arranged on shelving. Nonetheless, it is possible that, in a not too far future, human operators are replaced by robots 33 capable of performing the same operations. In an alternative embodiment, it is possible that operator 33 is a non-human operator, and that the method works in the same way. In this case, though, the app 30 might be loaded in a memory placed inside the robot itself and not in a mobile terminal 3. In other words, the non-human operator 33 would integrate the functions of the mobile terminal 3.

The term "app" means a software program, which can be loaded in a memory of the customer terminal or of staff terminal, and which is executable by the terminal itself according to a manual or automatic recall of the program and at the execution command of the program itself. The program manages the operating units of the terminal, like e.g. the video interface and/or the touchscreen and/or an audio interface and/or Bluetooth or NFC or similar communication interfaces, so as to execute given functions of the system.

Therefore, a customer or staff terminal comprises at least a processing unit with at least a processor and with one or more non-volatile memory and/or removable memory of any kind, and with peripheral units for visualizing, command inputting, receiving and transmitting acoustic signals, communicating according to one or more different possible data interchange protocols with remote units.

The customer terminal can be configured as a client of a server system.
3 mobile device of a staff member of the PoS
4 mobile device of a consumer
10 centralized marketing
11, 12, 13 Point of Sale (PoS)
30 app working on mobile terminals
33 PoS staff member
44 customer
100 ideal planogram
101 real planogram
111 shelving in the point of sale 11
121 shelving in the point of sale 12
131, 132, 133 shelving in the point of sale 13
131i image of the shelving 131
131p signal for a promotion under way
131s portion of an image 131i
150 database of the products of a given PoS
201, 202, 203 articles on sale
301, 302, 303 beacon
431, 432, 433 supply and control device of a light source
531, 532, 532 light source
B3,pos3: set of the signals coming from beacons 301, 302, 303, ... characterizing Pos(3)
Id3 unique identifying code of the owner of terminal 3

## Claims

1. Method for detecting the correct displaying of goods in a point of sale, wherein said goods (201, 202, 203, ...) on sale are displayed on a plurality of shelving (131, 132, 133....), each shelving supporting at least one beacon of a plurality of beacons (301, 302, 303, ...) identifying at least one portion of the shelving, the said beacons being uniquely related each one to a corresponding shelving and to a portion of the said shelving and in combination with a network comprising:
- a terminal (3) for at least one operator (33);
- a remote server in which there is stored an ideal desired disposition of goods contained in an ideal planogram (100) saved in a memory of said remote server, the planogram comprising a map of the shelving at least in a PoS and goods identification codes including at least one image of the packaging of the good and/or the corresponding EAN (European Article Number) or a bar code or a QR-code;
- a mobile device (4) for at least one customer entering the said PoS,
the method comprising the following steps:
- Determining the position of the operator by the determining the position of the mobile terminal (3) in relation to the shelving provided in the PoS by processing of signals coming from at least one beacon (301, 302, 303, ...);
- Determining the nearest shelving and the nearest portion of the shelving relatively to the terminal (3) of the operator (33);
- Requesting by terminal (3) to said remote server to provide the ideal desired disposition of goods contained in an ideal planogram (100) saved in a memory of said remote server, which ideal desired disposition is relating to the portion of shelving which is nearest to the mobile terminal (33);
- Receiving by terminal (3) the required information and visualization on said mobile terminal (3) of said information;
- Arranging by operator (33) of the goods on the shelving according to the ideal planogram (100);
- Successive acquiring, by operator (33) through mobile terminal (3), a photographic image (131i) of the shelving just arranged and transmitting said photographic image to the remote server together with the unique identification of the shelving and of the portion of the shelving by means of the unique identification message received from the associated beacon;
- Receiving said photographic image by said remote server, and recognizing the shelving and the portion of the shelving and the products reproduced on the photographic image by image processing this image;
- Comparing the products identified on the photographic image and their position in the said photographic image on the shelving with the products and their position on the portion of the shelving according to the ideal planogram (100) saved in the memory of said remote server image for determining the differences between the real position of the products and the position of the products according to the real planogram (100) and construction through said image (131i) of a corresponding portion of a real planogram (101) by updating the ideal planogram (100) according to the said differences.

2. Method according to claim 1, in which the step of comparing the position of the products on a shelving or on a portion of the said shelving according to the ideal planogram (100) with the position of the products on a shelving or on a portion of the said shelving according to the processed acquired photographic images comprises:
- Recording of said image or images (131i) by the photocamera of the mobile terminal (3);
- Successive recording by the mobile terminal (3) of signals (B3, Pos3) coming from beacons (301, 302, 303, ...);
- Successive registration by the mobile terminal (3) of a unique identifying code (Id3) of the staff owner of the mobile terminal (3);
- Transferring said photographic image or images, and the said signals coming from beacons and unique identifying code (131i, B3, Pos3, Id3) to remote processing server;
- The remote server of a program performing a processing algorithm, which program performs the following functions:
- Subdividing received image or images (131i) into portions (131s) having a reduced dimension;
- Comparing each portion of said image with images present in a database (150), which database comprises images of the products on sale in said point of sale, until the code of product (201) really present corresponding to that present in image (131s) of reduced proportions is individuated;
- Possibly recognizing the presence of the same product in adjacent portions of said image;
- Generating an output showing the disposition of products really present on shelving (131);
- Updating of the really obtained disposition of products (101);
- Referring to shelving (131), comparing between the ideal disposition of goods contained in ideal planogram (100) and the really obtained disposition contained in real planogram (101), and highlighting of gaps;
- Transferring of the results of the comparison to users of said comparison.

3. Method according to one of preceding claims, wherein the detection of position (Pos3) of operator (3) occurs through detection of the position of terminal (3) through comparison of shelving pictures, or possibly through photographs of a QR code univocally related to a given position, which is transmitted to remote server.

4. Method according to one of the preceding claims, wherein the subdivision of the photographic images in a plurality of partial images or image sectors occurs by identifying in the image the regular pattern of the structural feature of the shelving like posts and shelves by means of a function computing the different possible patterns basing on regular, typical features of the shelves relating to predetermined positions of the shelves, predetermined thickness of the shelves and/or heights of the label supports and determining the shelving portions in which the product are stored;
each image portion being related to a shelving portion between at least two shelves and between at least two posts.

5. Method according to one of preceding claims, further comprising a step of processing the photographic images for recognizing stock shortage and/or absence of one or more product, and transmitting to staff advices corresponding to said stock shortage and to the need to re-fill shelving with new goods.

6. Method according to one of preceding claims, comprising providing the steps of recognizing the presence of a mobile device (4) of a customer in the PoS;
determining the position of the mobile device (4) in relation to the shelving and to portion of shelving uniquely associated to one beacon and identified by the identification message transmitted by the said beacon by using the signals emitted by one or more of the beacons (301, 302, 303, ...);
generating and visualizing or transmitting a message and/or a map informing said customer on its position in the PoS relatively to the shelving;
acquiring information about products in the shopping list and informing by visual means or by text where the said products are displayed on the shelving and optionally which products of the shopping list are present on the shelving or on a portion of the shelving which is nearest to the mobile device (4), and optionally transmitting to the mobile device (4) coupons for promotion of said goods.

7. Method according to one of the preceding claims, comprising the steps of:
- Generating or saving on the mobile device (4) of a customer a shopping list in which specific desired products (201) are indicated or marked;
- Automatic identification of the presence of one or more products indicated in said shopping list on one or more shelving (131) by connecting the mobile device (4) to the remote server;
- Determining on which shelving and portions of shelving the products of the shopping list are stored and generating a map of the said products in the PoS;
- Identifying the position of the mobile device (4) by means of the signals emitted by the beacons;
- Controlling a shelving lighting system (431, 432, 433, ...; 531, 532, 532, ...), which lighting system is associated to shelving (131), to emission of light signals capable of drawing the attention of the customer when a customer (4) is near, or within a given distance from, a shelving (131) displaying an article (201) on her/his shopping list.

8. A system for supervised displaying of goods in a point of sale and for automatically guiding customers during shopping, the system , comprising:
- a plurality of shelving (131, 132, 133, ...), supporting a plurality of beacons (301,302,303);
- each beacon of the said plurality being uniquely associated to one of the shelving and/or to one or more portions of a shelving and being configured to emit a message identifying the associated shelving and/or portion of shelving;
- at least a mobile terminal (3) associated to at least one staff member (33), which terminal comprises a processor, at least a memory in which a control program executable by the terminal itself, at least a visualizing display, input means for inputting data or commands, at least a photocamera, and at least a communication interface;
- a remote server on which a program (30) is loaded and is executed from the server itself for managing a digital planogram (100) of the shelving and the goods stored on the said shelving and/or on the said portions of shelving, the said digital planogram comprising a map of the PoS (Point of Sale), comprising the position of one or more shelving and of their portions in the said PoS;
- the control program configuring the terminal (3) for acquiring the shelving and/or portion of shelving identifying message of the beacons and for determining the position of the terminal relatively to the shelving and/or to the portion of shelving corresponding to each shelving identifying message received;
- the control program controlling the communication interface of the terminal (3) for communicating with the remote server and/or one or more beacons associated to one or more shelving and/or portion of shelving;
- the control program determining the nearest shelving and/or portion of shelving to the mobile terminal and communicates the identifying message of this shelving and/or portion of shelving to the remote server;
- the remote server sending data of the planogram relating to the said shelving and/or portion of shelving, i.e. data of the goods and their disposition on the shelves of the said shelving to the mobile terminal (3);
- the photocamera being configured to acquire images of the faces of the package of the products positioned on the said nearest shelving and/or portion of shelving and/or of the EAN code (European Article Number Code) of the said products and the control program of the terminal (3) transmitting to the remote server the said acquired images associated to the shelving identifying message relatively to the said shelving and/or portion of shelving;
- an image processing unit residing at least in part or completely in the mobile terminal (3) or in the remote server or in a cloud server processing the acquired images for recognizing selected parts of the product packages and or of the EAN and identifying the position of these product in the shelving and/or portion of shelving;
- the image processor comprising a comparing unit comparing the identified position of the products with the stored planogram for the same shelving and/or portion of shelving and identifying the differences between the position of the products according to the ideal planogram stored in the remote server and the real positions of the products in the shelving and/or portion of shelving reproduced in the acquired image and storing the said differences in the remote server for further use in generating instructions to repositioning the products on the shelving for eliminating the said differences or for generating a real planogram having at least limited time validity till a repositioning process of the products has been carried out and validated by repeating the steps of acquiring a photograph of the shelving and/or portion of shelving and processing the images by the image processor;
- the system further comprising:
- at least a mobile device (4) associated to at least one customer (44), which device comprises a processor, at least a memory in which a control program executable by the mobile device (4) is stored, at least a visualizing display, means for inputting data or commands, at least a photocamera, and at least a communication interface with the remote server and/or one or more beacons associated to one or more shelving and/or one or more portion of shelving;
- means for generating a shopping list by manual input of data or by input of product images or EAN codes;
- the control program controlling the communication interface of the mobile device (4) for communicating with the remote server and/or one or more beacons associated to one or more shelving and/or to one or more portions of shelving;
- the mobile device (4) receiving the real planogram by the remote server and generating a map of the shelving and/or of the portion of shelving within the PoS and a related map of the positions of the products of the shopping list within the said map of the shelving and/or portion of shelving by means of the said real planogram;
- the control program configuring the mobile device (4) for acquiring the shelving and/or the portion of shelving identifying message of the beacons and for determining the position of the mobile device (4) relatively to the shelving and/or to the portion of shelving corresponding to each shelfing identifying message received;
- the control program of the mobile device displaying the map of the shelving and/or of the portion of shelving within the PoS, the position of the mobile device (4) and highlights visually the shelving and/or the portion of shelving containing the products listed in the shopping list.

9. System according to claim 8 in which said shelving optionally comprising a system (531, 532, 533, ...; 431, 432, 433; ...) for lighting goods (201, 202, 203, ...) displayed on said shelving themselves, which system electrically supplies said beacons too;
the said system for lighting good being controlled by the remote sever or directly by the mobile device (4) for illuminating a product which is stored on a shelving and/or on a portion of shelving and which is in the shopping list stored in the mobile device (4).

10. System according to claims 8 or 9 in which the control program of the mobile device (4) is configured to determine the position of the mobile device (4) relatively to the shelving and/or to the portion of shelving and to determine the nearest shelving and/or portion of shelving.

11. System according to one or more of the preceding claims 8 to 10 in which the mobile device (4) comprises a photocamera for acquiring images of the shelving and/or of the portions of shelving in the PoS, the images of the shelving and/or of the portions of shelving being processed by the image processor for determining the products reproduced on the image of the shelving and/or of the portions of shelving, comparing means being provided for comparing the identified products in the image and the products in the shopping list;
optionally generating a control signal for activating the system for lighting goods on the shelving and or on the portions of shelving, for lighting the goods on the shelving and/or of the portions of shelving which are provided in the shopping list.

12. A system according to one or more of the preceding claims 8 to 11, in which the position of the mobile device (4) in relation to a shelving triggers automatically or by request commands the transmission to the mobile device (4) of messages about the one or more products which are stored on the shelving and/or on the portion of shelving which is the nearest to the mobile device (4).

13. A system according to one or more of the preceding claims 8 to 12, in which in combination with the camera of the terminal (3) of the operator or alternatively to this the system comprises webcams which can be unmovable or mobile and/or drones provided with webcams.

14. Executable program, also known as app (30), loaded on a terminal (3) and on a mobile device (4) which program is executable by said terminal and/or mobile device to perform the method according to claims 1-7.
